Europäisches Patentamt

European Patent Office

Office européen des brevets

(19)

(11) Veröffentlichungsnummer: **0 144 755**
**B1**

(12) EUROPÄISCHE PATENTSCHRIFT

(45) Veröffentlichungstag der Patentschrift:
08.02.89

(21) Anmeldenummer: 84113291.3

(22) Anmeldetag: 05.11.84

(51) Int. Cl.⁴: **A 23 L 1/216**, A 23 L 1/2165

ERRATUM

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| Integral 0 bis 5 TdT | 3 | 4 | 45 | Integral 0 bis t TdT |

Tag der Entscheidung
über die Berichtigung )
Date of decision on ) 31.1.90
rectification: )
Date de décision portant )
sur modification: )

Ausgabe- und Veröffentlichungstag: )
Issue and publication ) 25.4.90
date: )
Date d'edition et de )
publication: )

Patbl.Nr.) 90/17
EPB no:)
Bull. no:)

# Europäisches Patentamt

# European Patent Office

# Office européen des brevets

(11) Veröffentlichungsnummer: **0 144 755**
**B1**

(12) **EUROPÄISCHE PATENTSCHRIFT**

(45) Veröffentlichungstag der Patentschrift:
08.02.89

(51) Int. Cl.⁴: **A 23 L 1/216**, A 23 L 1/2165

(21) Anmeldenummer: 84113291.3

(22) Anmeldetag: 05.11.84

(54) Kartoffelpüree wie hausgemacht.

(30) Priorität: 11.11.83 DE 3340955

(43) Veröffentlichungstag der Anmeldung:
19.06.85 Patentblatt 85/25

(45) Bekanntmachung des Hinweises auf die Patenterteilung:
08.02.89 Patentblatt 89/6

(84) Benannte Vertragsstaaten:
AT BE CH DE FR GB IT LI NL

(56) Entgegenhaltungen:
DE-A- 2 855 704
US-A- 3 054 683
US-A- 3 458 325

(73) Patentinhaber: **PFANNI-WERKE OTTO ECKART KG,**
**Grafinger Strasse 6, D-8000 München 80 (DE)**

(72) Erfinder: **Kluge, Günter, Dr., Johann-Hackl-Ring 21,**
**D-8011 Grasbrunn 1 (DE)**
Erfinder: **Petutschnig, Karl, Sauerbruchstrasse 8/VII,**
**D-8000 München 70 (DE)**
Erfinder: **Pepperl, Thomas, Adalbert-Stifter-Strasse 35,**
**D-8192 Geretsried (DE)**

(74) Vertreter: **Deufel, Paul, Dr. et al, Patentanwälte**
**Müller-Boré, Deufel, Schön, Hertel, Lewald, Otto**
**Isartorplatz 6 Postfach 26 02 47,**
**D-8000 München 26 (DE)**

ACTORUM AG

## Beschreibung

Die vorliegende Erfindung betrifft ein Verfahren zur Herstellung eines Kartoffelpürees, das in Geschmack, Aussehen und Konsistenz einem hausgemachten Kartoffelpüree gleichkommt.

Der haushaltsmässig hergestellte Kartoffelbrei wird üblicherweise folgendermassen zubereitet: gewaschene Kartoffeln werden geschält und geviertelt und in Salzwasser gekocht, bis sie gar sind. Danach werden die heissen Kartoffeln mit Hilfe einer Kartoffelpresse bzw. mit Hilfe eines Kartoffelstampfers püriert, so dass ein Brei entsteht.

Dieser Brei, der auch noch grössere Kartoffelstückchen enthält, wird nun mit Milch, Butter, Salz und Gewürzen gut abgeschlagen. Das Ergebnis der haushaltsmässigen Herstellung ist nun ein schaumig-lockerer Kartoffelbrei, der noch einen sensorisch deutlich feststellbaren Anteil von nicht zerkleinerten Kartoffelklümpchen enthält.

Aufgabenstellung der vorliegenden Erfindung ist es nun, ein Trockenkartoffelpüree zur Verfügung zu stellen, das nach der Zubereitung in seinen sensorischen Eigenschaften einem hausgemachten Kartoffelpüree weitgehend ähnlich ist.

Zwei grundlegende Verfahren zur Herstellung von Kartoffeltrockenpüree haben sich durchgesetzt:

### 1. Kartoffelflockenverfahren

Die geschälten Kartoffeln werden in Scheiben geschnitten, vorgekocht, gekühlt und fertiggekocht und im Anschluss an einen Pürierschritt auf einem Walzentrockner zu Flocken getrocknet.

### 2. Granulat-Verfahren

Die Kartoffeln werden gekocht und püriert, ein entsprechender Anteil, gemäss dem Rückführverfahren bereits getrocknetes Kartoffelgranulat (add-back) wird zugesetzt und untergemischt; das entstandene Granulat wird auf dem Fliessbett getrocknet.

Die Konsistenz industriell hergestellter Trockenkartoffel-Pürees zeigt gegenüber dem haushaltsmässig hergestellten Frisch-Püree deutliche Qualitätsnachteile. Es hat deshalb nicht an Versuchen gefehlt, die Konsistenz von industriellen Trockenkartoffel-Pürees zu verbessern. In der DE-A-12 855 704 «Verfahren zur Verbesserung der Konsistenz eines angemachten Instant-Pürees» wird ein Verfahren beschrieben, bei dem die Püree-Konsistenz dadurch verbessert werden soll, dass einem Trockenkartoffel-Püree rohe Pflanzenfasern in einer Menge bis zu 10 Gew.-% einverleibt werden. Zielsetzung dieses Verfahrens ist es, ein Püree höherer Konsistenz herzustellen, d.h. zu verhindern, dass das zubereitete Püree eine wässrige Konsistenz aufweist.

Des weiteren ist aus der US-A-13 355 304 ein zweistufiges Verfahren zur Herstellung von Kartoffelpüree bekannt. Dabei werden die ganzen Kartoffeln vorgekocht, bis sie an der Aussenseite gegart sind, anschliessend in Scheiben geschnitten und bei höherer Temperatur gekocht; die gekochten Scheiben werden teilweise püriert, verbleibende Klumpen, die noch nicht vollständig fertiggekocht sind, werden durch Andrücken an den Walzentrockner zerkleinert und gleichzeitig fertiggekocht.

Ausserdem ist aus der US-A-13 054 683 ein Verfahren zur Herstellung eines Trockenkartoffel-Pürees bekannt, das die Zielsetzung verfolgt, ein Püree zur Verfügung zu stellen, das nach der Zubereitung kein sandiges, wattiges Mundgefühl, sondern eine glatte, angenehme Konsistenz ergibt. Dies wird erreicht, indem beispielsweise Alginate, Guarmehl, Gummiarabicum, Tragant und ähnliche Polysaccharide zugesetzt werden.

Aus der US-PS 3 458 325 ist es bekannt, etwa 3 Gew.-Teile Kartoffelflocken mit etwa 1 Gew.-Teil Kartoffelgranulat, die jedoch beide aus vollständig gegarten Kartoffeln bestehen, trocken zu vermischen und die trockene Mischung auf einen Feuchtigkeitsgehalt von 25% anzufeuchten, und unter Mischen zu einem groben, körnigen Produkt zu agglomerieren und zu trocknen. Bei Verwendung dieses Produktes für Kartoffelbrei ergibt sich jedoch ein vollkommen glatter Brei, ohne die hier gesuchte sensorische Eigenschaft eines gewissen Kornanteils, wie er für hausgemachten Kartoffelbrei typisch ist.

Die erfindungsgemässe Lösung der Aufgabenstellung, ein industriell hergestelltes Trockenkartoffel-Püree zur Verfügung zu stellen, das in seinen Eigenschaften einem hausgemachten Frisch-Kartoffelpüree gleichkommt, beinhaltet nun folgende Verfahrensschritte:

1. Verwendung eines üblicherweise hergestellten Kartoffelflocken-Pürees bzw. Kartoffel-Granulats als Basiskomponente für das erfindungsgemässe Kartoffelpüree.

2. Zusatz einer zweiten Kartoffelkomponente, die wie folgt hergestellt wird: die geschälten Kartoffeln werden in Stücke etwa gleicher Dicke und Grösse geschnitten; die Kartoffelstücke werden bei einer Temperatur zwischen 70 °C und 100 °C in Wasser oder Dampf so lange erhitzt (blanchiert), bis bei Auftragen der Temperatur in Grad Celsius gemessen im thermischen Zentrum des Kartoffelstückchens gegen die Erhitzungszeit in Minuten die von dem bestimmten Integral

$$\int_0^t T\, dT$$

begrenzte Fläche 100 °C min bis 600 °C min beträgt.

Die so hitzebehandelten Kartoffelstückchen werden dann schonend getrocknet, vorzugsweise auf einen Endwassergehalt von etwa 8%. Die erhaltenen Trockenkartoffelstückchen werden anschliessend zerkleinert und eine Fraktion von > 0,25 bis < 2,5 mm ausgesiebt und als zweite Kartoffelkomponente in einer Menge von 3 bis 30%, bezogen auf Gesamtmenge, eingesetzt.

Vorzugsweise werden Kartoffelstückchen mit geringen Querschnitten wie z.B. Streifen 5 × 7 mm oder Scheiben 10 × 10 × 2,5 mm verwendet, um einen gleichmässigen Garungsgrad über den gesamten Querschnitt zu erhalten. Die teilgegarten Kartoffelstückchen werden dann vorzugsweise auf einem Konvektionstrockner (z.B. Bandtrockner) zunächst bei einer Temperatur von 120 °C, abfallend bis auf 70 °C, zum Trocknungsende hin bis auf einen Endwassergehalt von ca. 8% getrocknet (Trocknungsdauer je nach Grösse der Kartoffelstückchen ca. 4,5 h). Das Zerkleinern der Trockenkartoffelstückchen erfolgt vorzugsweise in einer Hammermühle mit einem 3 mm Siebeinsatz bei geeigneten Umdrehungsgeschwindigkeiten, insbesondere bei 1500 U/min. Von dem erhaltenen Mahlgut wird vorzugsweise eine Fraktion von >0,5 mm bis <1,0 mm ausgesiebt und als zweite Komponente des erfindungsgemässen Trockenkartoffelpürees eingesetzt (eine bevorzugte Kornverteilung ist am Ende des Beispiels angegeben). Zur Herstellung eines erfindungsgemässen Pürees eignen sich aber auch Granulate gröberer oder feinerer Kornverteilungen, wie erwähnt >0,25 bis <2,5 mm. Das erfindungsgemäss blanchierte Kartoffelgranulat wird einem Kartoffelflockenpüree oder -granulat in einer Menge von 3 bis 30%, vorzugsweise 10–15 Gew.-%, bezogen auf Gesamtmenge (also Mischung von Basispüree mit zweiter Komponente) zugesetzt.

Selbstverständlich kann das Flockenpüree bzw. das Granulat auch Milchbestandteile oder Würzkomponenten enthalten, wie dies auf dem Kartoffelpüreegebiet bekannt ist. Das blanchierte Granulat, das bevorzugterweise in einer Menge von 10 bis 15% in der Gesamtmischung enthalten ist, führt nach der Zubereitung des Pürees zu einer Konsistenz ähnlich der eines frisch zubereiteten Kartoffelpürees, d.h. es sind noch deutlich klümpchenförmige Püreeteilchen wahrnehmbar. Dies ist der überraschende Effekt, der kartoffelsortenabhängig nur bei Einhaltung eines Kochungsgrades erreichbar ist, der einem Integralwert zwischen 100 °C min und 600 °C min entspricht. Der bevorzugte Bereich liegt zwischen 300 °C min und 500 °C min.

Anhand eines Beispieles soll die Erfindung nun näher erläutert werden:

Die Herstellung der erfindungsgemässen blanchierten Granulatkomponente erfolgt in folgender Weise:

Kartoffeln der Sorte Bintje werden in einem Dampfschäler geschält und anschliessend zu Schnitzeln von 5×7 mm geschnitten. Die Schnitzel werden in strömendem Dampf 6 min bei 100 °C gekocht (siehe Kerntemperaturmessung), was einem Integralwert von 430 °C min entspricht. Die behandelten Schnitzel werden auf einem Bandtrockner bis auf einen Endwassergehalt von 8% getrocknet. Die getrockneten Schnitzel werden in einer Hammermühle, die mit einem 3 mm Siebeinsatz ausgestattet ist, vermahlen, aus dem Mahlgut wird die Fraktion 0,5 mm bis 1 mm ausgesiebt. Das erhaltene Kartoffelgranulat wird in einer Menge von 12% der Gesamtmenge mit einem Trockenkartoffelflockenpüree gemischt und abgefüllt (also Zusammensetzung 12%+88%).

Die Zubereitung des Trockenpürees erfolgt, indem ¹/₄ l Wasser und ¹/₄ l Milch zusammen aufgekocht werden, 90 g des erfindungsgemässen Pürees kurz eingerührt werden und nach ca. 1 min noch einmal kräftig durchgerührt wird. Das Ergebnis ist ein Kartoffelpüree von ausgezeichnetem Geschmack und einer typischen Konsistenz, wie aus frisch gestampften Kartoffeln.

Die als zweite Kartoffelkomponente verwendeten Kartoffelstückchen waren durch einen Siebeinsatz von 0,5 bis 1,0 mm gesiebt und diese abgesiebte Fraktion 0,5 bis 1,0 mm hatte folgende Kornverteilung:

| 1,0 | 0,75 | 0,6 | 0,5 | 0,5 |
|---|---|---|---|---|
| 0,25% | 47,55 | 18,35% | 27,75% | 6,1% |

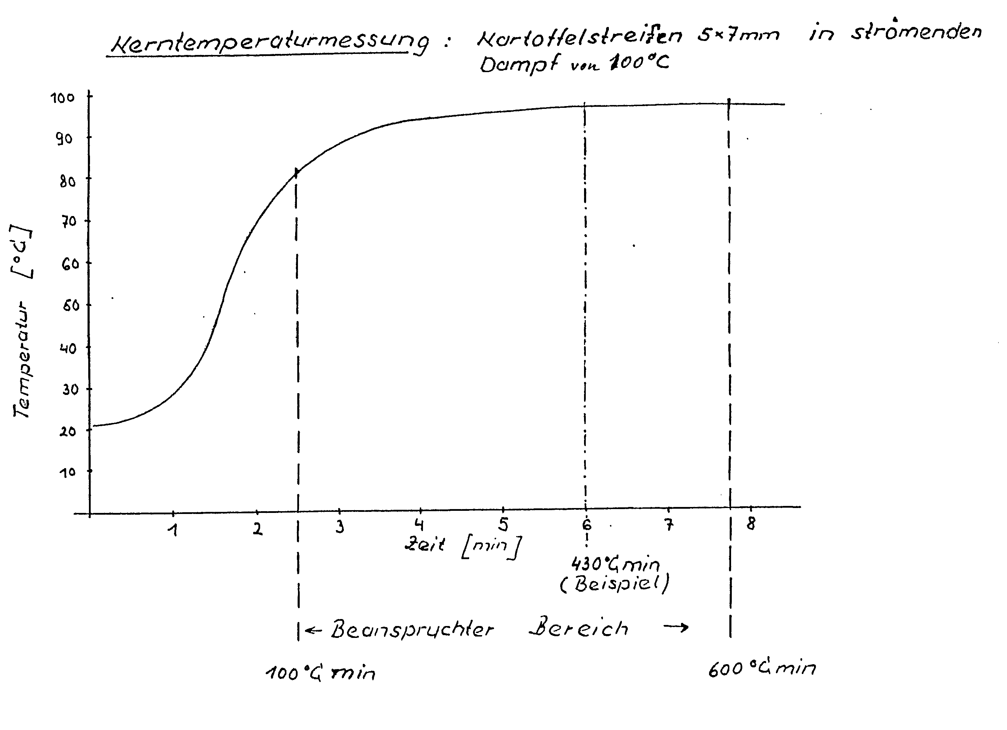

Die beigefügte Figur zeigt den Kurvenverlauf der Einstellung der Kerntemperatur von Kartoffelstreifen 5×7 mm in strömendem Dampf von 100 °C, wobei das beanspruchte Integral gestrichelt und das im Beispiel verwendete Integral strichgepunktet eingetragen sind.

## Patentansprüche

1. Zu Kartoffelpüree, das hausgemachtem sensorisch weitgehend ähnlich ist, rehydratisierbares Kartoffeltrockenprodukt unter Verwendung eines grösseren Anteils von üblicherweise hergestellten Kartoffelpüree-Trockenflocken, bzw. -granulat als Basiskomponente und eines kleineren Anteils von Kartoffelgranulat als Zusatzkomponente, dadurch gekennzeichnet, dass beide Komponenten trocken vermischt sind und dass die Zusatzkomponente aus teilgegarten, dann getrockneten und auf eine Korngrösse von >0,25 bis <2,5 mm zerkleinerten Kartoffelstücken hergestellt worden ist, wobei der Garungsgrad dieser Kartoffelstücke bei Auftragen der Temperatur in °C, gemessen im thermischen Zentrum der Kartoffelstücke, gegen die Erhitzungszeit in Minuten der von dem bestimmten Integral 0 bis 5 TdT begrenzten Fläche 100 °C · min bis 600 °C · min entspricht.

2. Kartoffeltrockenprodukt nach Anspruch 1, dadurch gekennzeichnet, dass der Garungsgrad der zweiten Kartoffelkomponente einem Integralwert zwischen 300 °C · min und 500 °C · min entspricht.

3. Kartoffeltrockenprodukt nach Anspruch 1 oder 2, dadurch gekennzeichnet, dass die zweite Kartoffelkomponente eine Teilchengrösse von 0,5 mm bis 1 mm aufweist.

4. Kartoffeltrockenprodukt nach einem der Ansprüche 1 bis 3, dadurch gekennzeichnet, dass die zweite Kartoffelkomponente in einer Menge von 3 bis 30 Gew.-%, insbesondere von 10 bis 15 Gew.-%, bezogen auf Gesamtmenge, zugesetzt wird.

5. Verfahren zur Herstellung des Kartoffeltrockenprodukts nach Anspruch 1, dadurch gekennzeichnet, dass man etwa gleichmässig grossgeschnittene Kartoffelstücke erhitzt, bis bei Auftragen der Temperatur in °C, gemessen im thermischen Zentrum des Kartoffelstückchens gegen die Erhitzungszeit in min die von dem bestimmten Integral 0 bis t TdT begrenzte Fläche 100°C · min bis 600°C · min beträgt, wobei das Erhitzen der Kartoffelstückchen für die zweite Kartoffelkomponente bei Temperaturen zwischen 70°C und 100°C mit Heisswasser oder Wasserdampf erfolgt, diese teilgegarten Kartoffelstückchen schonend trocknet und anschliessend zerkleinert und eine Fraktion von >0,25 mm bis <2,5 mm aussiebt und diese ausgesiebte Fraktion einem bekannten Kartoffelflocken-Trockenpüree bzw. Kartoffelgranulat-Trockenpüree zusetzt.

6. Verfahren nach Anspruch 5, dadurch gekennzeichnet, dass der Garungsgrad einem Integralwert zwischen 300°C · min und 500°C · min entspricht.

7. Verfahren nach Anspruch 5 oder 6, dadurch gekennzeichnet, dass die Zusatzkomponente eine Teilchengrösse von 0,5 mm bis 1 mm aufweist.

8. Verfahren nach einem der Ansprüche 5 bis 7, dadurch gekennzeichnet, dass die Zusatzkomponente in einer Menge von 3 bis 30%, insbesondere 10 bis 15%, bezogen auf Gesamtmenge, zugesetzt wird.

9. Verfahren nach einem der Ansprüche 5 bis 8, dadurch gekennzeichnet, dass die zweite Kartoffelkomponente zur Garungsbehandlung in Form von Kartoffelstreifen oder -scheiben eingesetzt wird.

10. Verfahren nach Anspruch 9, dadurch gekennzeichnet, dass die Trocknung der teilgegarten Kartoffelstückchen zunächst bei einer Temperatur von 120°C, abfallend bis auf 70°C zum Trocknungsende hin bis auf einen Endwassergehalt von ca. 8% erfolgt.

## Claims

1. Dried potato product which can be rehydrated to give mashed potatoes bearing a substantial sensory similarity to a home-made product, using a larger proportion of customarily prepared dried flakes or granules of mashed potato as the basic component and a smaller proportion of potato granules as an additional component, characterized in that the two components are mixed in the dry state and in that the additional component has been prepared from partially cooked potato pieces which have then been dried and comminuted to a grain size from >0.25 mm to <2.5 mm, the degree of cooking of these potato pieces corresponding to the area 100°C × min to 600°C × min limited by the definite integral 0 to τ TdT when the temperature in °C, measured at the thermal centre of the potato pieces, is plotted against the heating time in minutes.

2. Dried potato product as claimed in Claim 1, characterized in that the degree of cooking of the second potato component corresponds to an integral value of between 300°C × min and 500°C × min.

3. Dried potato product according to Claim 1 or 2, characterized in that the second potato component has a particle size of 0.5 mm to 1 mm.

4. Dried potato product according to any one of Claims 1 to 3, characterized in that the second potato component is added in an amount from 3 to 30% by weight, in particular from 10 to 15% by weight, relative to the total amount.

5. Process for the preparation of the dried potato product according to Claim 1, characterized in that the potato pieces, which have been cut into pieces of approximately the same size, are heated until the area limited by the definite integral 0 to τ TdT is 100°C × min to 600°C × min when the temperature in °C, measured at the thermal centre of the small potato piece, is plotted against the heating time in minutes, the heating of the small potato pieces for the second potato component being carried out at temperatures between 70°C and 100°C by means of hot water or steam, these partially cooked small potato pieces are dried gently and subsequently comminuted, and a fraction from >0.25 mm to <2.5 mm is collected by sieving and this fraction which has been collected by sieving is added to a known dried mash in the form of potato flakes or granules.

6. Process according to Claim 5, characterized in that the degree of cooking corresponds to an integral value between 300°C × min and 500°C × min.

7. Process according to Claim 5 or 6, characterized in that the additional component has a particle size from 0.5 mm to 1 mm.

8. Process according to anyl one of Claims 5 to 7, characterized in that the additional component is added in an amount from 3 to 30%, in particular from 10 to 15%, relative to the total amount.

9. Process according to any one of Claims 5 to 8, characterized in that the second potato component is employed in the form of potato strips or potato slices for the cooking treatment.

10. Process according to Claim 9, characterized in that the partially cooked small potato pieces are dried initially at a temperature of 120°C, decreasing to as low as 70°C towards the end of the drying process, to a final water content of about 8%.

## Revendications

1. Produit déshydraté de pommes de terre, réhydratable pour donner une purée de pommes de terre pratiquement analogue du point de vue organoleptique à celle faite à la maison, grâce à l'utilisation, comme composant de base, d'un pourcentage élevé de flocons déshydratés ou de granulés de purée de pommes de terre préparés comme d'habitude, et, comme composant supplémentaire, d'un pourcentage plus faible d'un granulé de pommes de terre, caractérisé en ce que les deux composants sont mélangés à sec, et que le composant supplémentaire a été préparé à partir de morceaux de pomme de terre partiellement cuits, puis séchés et désagrégés jusqu'à une granulométrie >0,25 mm et <2,5 mm, le degré de cuisson de ces morceaux de pommes de terre correspondant, sur une courbe donnant les variations de la température en °C, mesurée au centre thermique des morceaux de pommes de terre, en fonction du temps de chauffage, en minutes, à une aire, déterminée par l'intégrale définie (somme de 0 à t) TdT, comprise entre 100 et 600 °C · min.

2. Produit de pommes de terre déshydraté selon la revendication 1, caractérisé en ce que le degré de cuisson du deuxième composant «pomme de terre» correspond à une intégrale définie comprise entre 300 et 500 °C · min.

3. Produit de pommes de terre déshydraté selon la revendication 1 ou 2, caractérisé en ce que le deuxième composant «pomme de terre» a une granulométrie de 0,5 à 1 mm.

4. Produit de pommes de terre déshydraté selon l'une des revendications 1 à 3, caractérisé en ce que le deuxième composant «pomme de terre» est ajouté en une quantité de 3 à 30% en poids, en particulier de 10 à 15% en poids, par rapport à la quantité totale.

5. Procédé de préparation d'un produit de pommes de terre déshydraté selon la revendication 1, caractérisé en ce qu'on chauffe des morceaux de pommes de terre grossièrement découpés d'une manière approximativement uniforme, jusqu'à ce que, sur une courbe donnant la température, en °C, mesurée au centre thermique du morceau de pomme de terre en fonction du temps de chauffage, en minutes, l'aire délimitée par l'intégrale définie (somme de 0 à t) TdT soit comprise entre 100 et 600 °C · min, le chauffage des morceaux de pommes de terre, pour le deuxième composant «pomme de terre« étant effectué à des températures comprises entre 70 et 100 °C, à l'eau chaude ou à la vapeur d'eau, puis qu'on sèche d'une manière modérée les morceaux de pommes de terre partiellement cuits, puis qu'on les désagrège et qu'on tamise une fraction > 0,25 mm et < 2,5 mm, et qu'on ajoute cette fraction tamisée à une purée déshydratée de flocons de pommes de terre, ou à une déshydratée de granulés de pommes de terre, déjà connue.

6. Procédé selon la revendication 5, caractérisé en ce que le degré de cuisson correspond à une valeur d'intégrale comprise entre 300 et 500 °C · min.

7. Procédé selon la revendication 5 ou 6, caractérisé en ce que le composant supplémentaire a une granulométrie de 0,5 à 1 mm.

8. Procédé selon l'une des revendications 5 à 7, caractérisé en ce que le composant supplémentaire est ajouté en une quantité de 3 à 30%, en particulier de 10 à 15%, par rapport à la quantité totale.

9. Procédé selon l'une des revendications 5 à 8, caractérisé en ce que le deuxième composant «pomme de terre» est, pour le traitement de cuisson, utilisé sous forme de lames ou de tranches de pommes de terre.

10. Procédé selon la revendication 9, caractérisé en ce que le séchage des morceaux de pommes de terre partiellement cuits s'effectue d'abord à une température de 120 °C, pour tomber à 70 °C à la fin du séchage, jusqu'à une teneur résiduelle en eau d'environ 8%.

Kerntemperaturmessung : Kartoffelstreifen 5×7mm in strömenden Dampf von 100°C

Temperatur [°C] / Zeit [min]

Beanspruchter Bereich

100 °C min

430 °C min (Beispiel)

600 °C min

EP 0 144 755 B1